Europäisches Patentamt

European Patent Office

Office européen des brevets

(19)

(11) Publication number: **0 188 988**
A1

(12) # EUROPEAN PATENT APPLICATION

(21) Application number: 85630002.5

(22) Date of filing: 15.01.85

(51) Int. Cl.⁴: **F 28 D 3/02**, F 24 D 11/00

(43) Date of publication of application: 30.07.86
Bulletin 86/31

(84) Designated Contracting States: AT BE CH DE FR GB IT
LI NL SE

(71) Applicant: KOOR METALS Ltd., 23 Timna Street
Industrial Zone, Holon (IL)

(72) Inventor: Masel, Ruben, 16 Hatzabar Street, Kiron (IL)
Inventor: Valdshtein, George, 15 Hashiluach, Holon (IL)

(74) Representative: Weydert, Robert et al, Office
Dennemeyer S.à.r.l. 21-25 Allée Scheffer P.O. Box 41,
L-2010 Luxembourg (LU)

(54) **Heat-exchanger and space heater or cooler including same.**

(57) A heat-exchanger includes a thin, pliable foil (36) loosely resting against a heat-conductive wall of an enclosure (31a, 31b, 31c) for one of the materials. The other material, a liquid, is inletted between the foil (36) and the wall at an upper location of the wall such that the liquid freely flows by gravity as a thin film between, and in contact with, the foil (36) and the wall in order to transfer heat to the material on the other side of the wall. There may be a plurality of such enclosures supported at different heights, with a thin pliable foil (36) loosely resting on the outer wall of each.

ACTORUM AG

The present invention relates to a novel heat-exchanger, and also to a space heater or cooler including such heat-exchanger.

A large number of heat-exchangers have been developed for transferring heat between two materials, but efforts are continuously being made to increase the efficiency and to reduce the cost of the heat-exchanger. An object of the present invention is to provide a novel heat-exchanger which can be constructed at relatively low cost of a few simple parts, and which has a relatively high operating efficiency. A further object of the invention is to provide a space heater or cooler including the novel heat-exchanger.

According to a broad aspect of of the present invention, there is provided a heat-exchanger for transferring heat between a first liquid material and a second material, comprising a heat-conductive enclosure enclosing said second material, characterized in that said heat-exchanger further includes a thin, pliable foil loosely-resting against and substantially enclosing said heat-conductive enclosure; and inlet means for inletting said first liquid material between said foil and said heat-conductive enclosure at an upper location thereof such that said liquid freely flows by gravity as a thin film in contact with said foil and said heat-conductive enclosure to thereby transfer heat between said two materials through said heat-conductive enclosure.

Such a heat-exchanger is to be distinguished from the known thin-film free-flow solar collectors which include a supporting panel supporting a thin pliable foil, such that a liquid flowing by gravity between the foil and the supporting panel is heated by the solar radiations absorbed by or passing through the foil. In contrast with such an arrangement wherein the heat transfer is effected through the foil, in the present invention the heat transfer is effected through the heat-conductive enclosure for the material to be heated.

In one embodiment of the invention, the heat-conductive enclosure comprises a rigid heat-conductive wall against which the foil rests. However, further important advantages are obtained when, according to a second described embodiment, the heat-conductive enclosure comprises a rigid heat-conductive wall enclosed by a second thin pliable foil, the first-mentioned foil constituting an outer foil and loosely resting against the second foil, constituting an inner foil. The inlet means inlets the first liquid material between the inner and outer foils, and the space between the inner foil and the heat-conductive wall of the enclosure is vented to the atmosphere.

The invention is herein described, by way of example only, with reference to the accompanying drawings, wherein:

Fig. 1 is a transverse sectional view illustrating a simple heat-exchanger constructed according to the present invention;

Figs. 2, 3 and 4 are similar views illustrating further constructions of such heat-exchangers;

Fig. 5 is a transverse sectional view illustrating a solar heating system including a solar collector and a heat-exchanger according to Fig. 1;

Fig. 6 diagrammatically illustrates a large solar heating system constructed in accordance with the invention;

Fig. 7 is a transverse sectional view illustrating a heat-exchanger constructed in accordance with the invention embodied in a space heater or cooler;

Fig. 8 is a longitudinal sectional view of the space heater or cooler of Fig. 7;

Fig. 9 is  a transverse sectional view illustrating another form of heat-exchanger constructed in accordance with the present invention;and

Fig. 10 is a partial longitudinal sectional view of the heat-exchanger of Fig. 8.

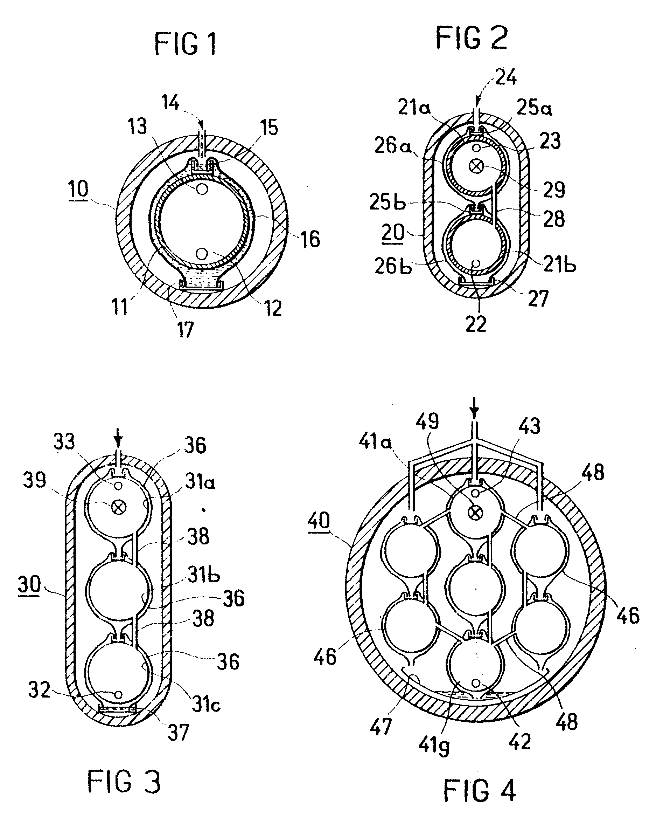

With reference to Fig. 1, there is illustrated a simple heat-exchanger including a housing 10 for a metal tubular container 11 for water or other liquid to be heated.  The cold water inlet 12 is at the bottom,  and the hot water outlet 13 is at the top.

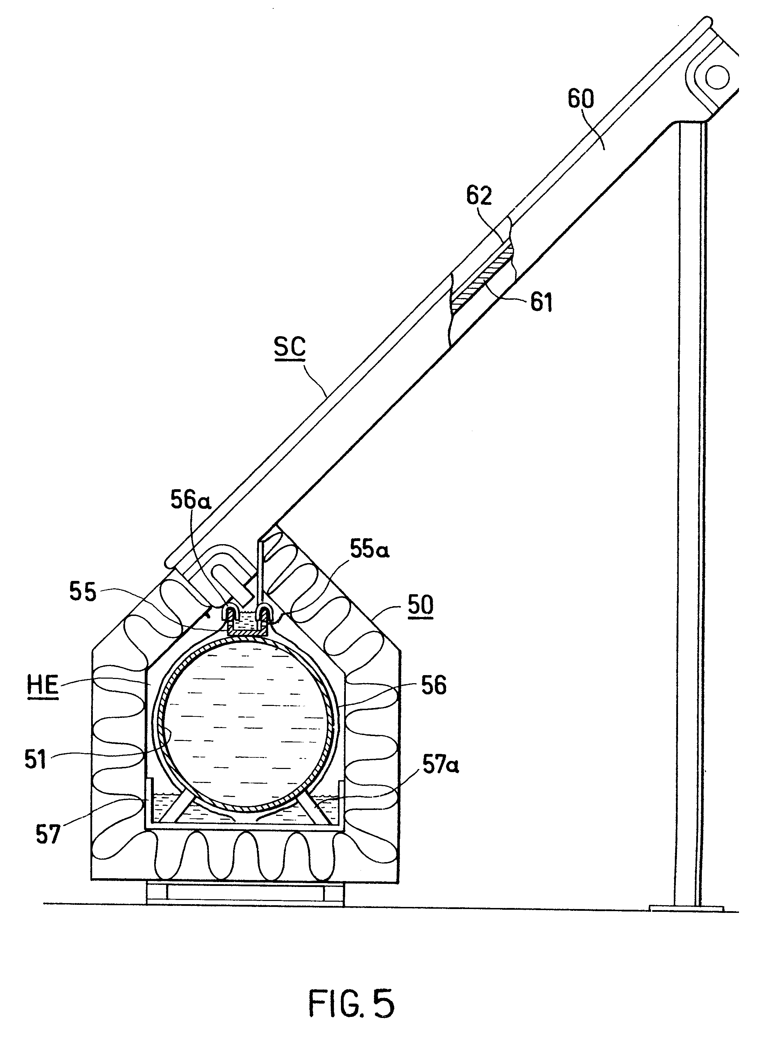

The water within container 11 is heated by a hot liquid inletted via housing inlet 14 to a channel member 15 at the upper end of container 11.  A thin pliable foil 16 is draped over each of the two sides of container 11, with the upper end of each foil 16 being fixed to the channel member 15, and the remainder of each foil loosely resting against the outer face of the container.  The lower ends of the two foils 16 define an open bottom leading to another channel member 17 serving as a drainage sump for the hot liquid. The upper channel member 15 is formed with longitudinally-spaced openings (e.g. 55, Fig. 5) to distribute the liquid within it along the length of the container 11, such that the hot liquid flows by gravity as a thin, freely-flowing continuous film between and in contact with the outer face of the container 11 and the inner face of the respective foil 16. A large surface area of the heating liquid is thus exposed to the two contacting faces of the container and foil, thereby providing an efficient heat-exchange between the two materials on opposite sides of the metal wall of the container.

Foils 16 may be of thin aluminum foil or plastic film having high wetability properties with respect to the heating liquid and the outer face of the container.

Fig. 2 illustrates a variation, wherein the housing 20 encloses two tubular containers for the liquid to be heated, the lower container 21b including the cold-water inlet 22, and the upper container 21a including the hot-water outlet 23. Both containers 21a, 21b receive loosely resting thin pliable foils, 26a, 26b, for conducting the heating liquid as thin, freely-flowing, continuous films between and in contact with the outer faces of their respective containers and the inner faces of their respective foils. The heating liquid is introduced via inlet 24 and is received within a distributor channel 25a at the upper end of the upper container 21a. The open bottom of the upper container foils 26a is aligned with a distributor channel 25b at the upper end of the lower container 21b, and the open bottom of the lower container foils 26b is aligned with the drainage sump 27.

The two-container arrangement illustrated in Fig. 2 further includes a pipe 28 providing communication between their interiors to permit stratification of the hot water; i.e., the hot water accumulates in the upper container 21a, and the cold water in the lower tube 21b. The upper container 21a preferably also includes a back-up electrical heating element 29 which may be energized whenever desired to assure an adequate supply of hot water at the hot water outlet 23.

Figs. 3 and 4 illustrate two further arrangements to increase the stratification of the water heated by the device. Thus, in Fig. 3 the housing 30 includes three tubular containers 31a-31c arranged one above the other, with the cold water inlet 32 being at the bottom of the lowermost container 31c, and the hot water outlet 33 being at the top of the uppermost container 31a. Fig. 4 illustrates an arrangement wherein the housing 40 includes seven such tubular containers 41a-41g arranged at different heights, the cold water inlet 42 being at the bottom of the lowermost container 41g, and the hot water outlet 43 being at the top of the uppermost container 41a. In both arrangements of Figs. 3 and 4, each container is provided with a loosely resting thin pliable foil (36,46) for conducting the heating liquid as a thin, freely-flowing, continuous film between the outer face of the respective container and the inner face of the respective foil, the heating liquid draining into a bottom sump as shown at 37, 47. In addition, in both arrangements the interiors of the containers are interconnected by pipes (38,48) to permit a flow between them of the water to be heated, and thereby stratification of the water within the containers. Further, the uppermost container is provided with a back-up electrical heating element (39,49) to assure an adequate supply of hot water on demand at the respective outlet (33, 43).

Fig. 5 illustrates a simple solar heating system including a solar collector SC and a heat-exchanger HE similar to that shown in Fig. 1. Thus, heat-exchanger HE includes an insulated housing 50 around a metal tubular container 51 adapted to contain water (or other liquid) to be heated by the energy collected by the solar collector. This energy is absorbed by a liquid passing through the solar collector and received within a distributor channel 55 at the upper end of container 51. As in Fig. 1, a thin pliable foil 56 is secured at its upper end to each side of channel 55 and loosely rests against the outer wall of container 51, the lower ends of the foils being open and received within a drainage sump 57.

Fig. 5 further illustrates the means for securing the upper ends of the foil 56 to the distributor channel 55, the latter means being in the form of spring-clips 56a clipping the upper edge of the foils 56 which have been bent-over the respective side of the distributor channel 55. Fig. 5 also illustrates the longitudinally-spaced openings 55a, for distributing the hot liquid along the length of container 51 between its outer face and the inner face of the loosely-resting foils 56, and mounting legs 57, for mounting the drainage sump 57 to the bottom of container 51.

The solar collector SC is preferably of the previously-mentioned thin film, free-flow type including a housing 60 adapted to be mounted at an incline to receive the maximum solar radiations. Within the housing 60 is a supporting panel 61 against which loosely rests a thin pliable film 62 of radiation-absorbant material, such as aluminum foil, for absorbing the solar radiation. A liquid, such as hydrocarbon oil or water, is introduced between the foil 62 and the supporting panel 61 at the upper end of the solar collector and flows by gravity as a thin, continuous freely-flowing film adhering to both the foil 62 and the supporting panel 61.

The novel heat-exchanger of the present invention is particularly useful in combination with such a free-flow solar collector, since such a combination enables the overall system to be of an extremely simple construction which can be produced in volume and at low cost and which is capable of a very high operating efficiency compared to other solar heating systems.

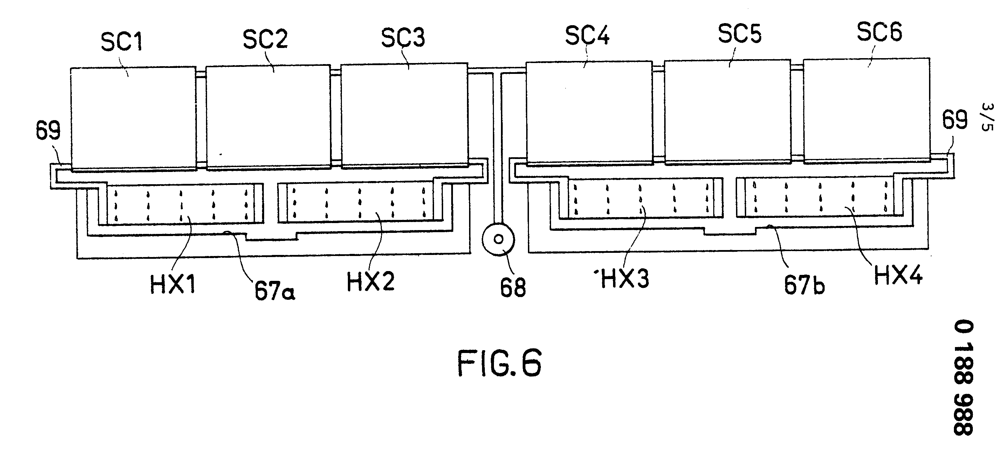

Fig. 6 diagrammatically illustrates a solar heating system of larger capacity, for example, as may be used in providing the hot water, centralized heating and/or air conditioning requirements of a large multi-unit building. The overall system in Fig. 6 includes a plurality of solar collectors $SC_1$-$SC_6$ for heating by solar radiation a liquid supplied to a plurality of heat-exchangers $HX_1$-$HX_4$ located below the solar collectors. A common drainage sump 67a, 67b, is provided for each group of three solar collectors supplying heated liquid to two heat-exchangers. The heating liquid is recirculated through the solar collectors by a pump 68 which pumps the liquid from the sumps 67a, 67b to the upper ends of the solar collectors $SC_1$-$SC_6$ in which the liquid is heated by solar radiations before being inletted via pipes 69, into the heat-exchangers $HX_1$-$HX_4$.

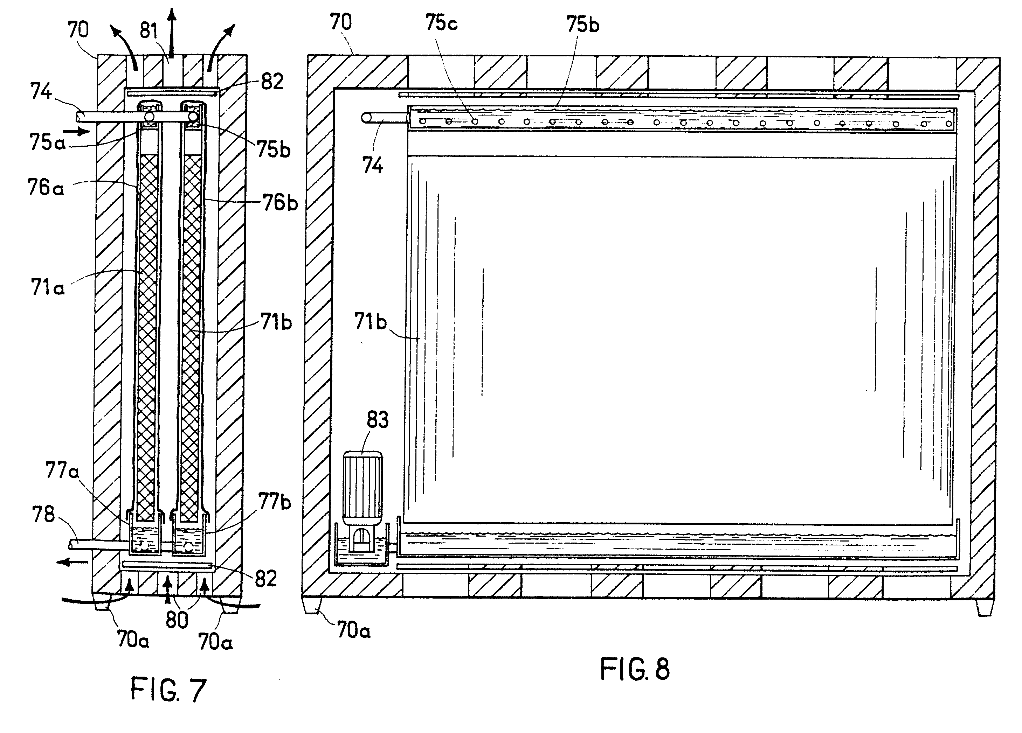

Figs. 7 and 8 illustrate the novel heat-exchanger of the present invention embodied in a space heater or cooler, e.g., for heating or cooling a room or other area by heat supplied from a solar collector or from another heat source. The space heater includes an insulating housing 70 of rectangular configuration adapted to be supported by legs 70a on the floor or other surface. Disposed within housing 70 are a plurality (two being illustrated) of metal containers 71a, 71b, containing a heat-storage material for storing heat supplied during one period of time, e.g., during the day, when heated by solar radiations, and for releasing the heat stored therein during another period of time, e.g.,

during the night. Preferably, the heat-storage material is of the phase-changing type, being liquid in the heated condition and solid in the cooled condition. As one example, there may be used calcium chloride, particularly $CaCl_2 \cdot 6H_2O$.

The heating liquid is inletted via an inlet pipe 74 and is fed to a distributor channel 75a, 75b at the upper end of each container 71a, 71b. As above, a thin pliable foil 76a, 76b, is secured at its upper end to one side of each distributor channel 75a, 75b, and is permitted to loosely rest against the respective outer face of the metal container, the lower ends of the foils being open and leading into a drainage sump 77a, 77b. Both sumps are connected by an outlet header 78 to a recirculation pump (not shown) which recirculates the heating liquid back to the source.

The distribution channels 75a, 75b at the upper ends of the metal containers 71a, 71b are formed with a plurality of openings 75c (Fig. 8) for uniformly distributing the heating liquid to the spaces between the inner faces of the foils 76a, 76b, and the outer faces of their respective containers 71a, 71b containing the heat-storage material. The heating liquid thus introduced via the inlet pipe 74 flows by gravity as thin, continuous, freely-flowing films between the foils and the metal containers to effect an efficient heat-exchange between the heating liquid and the heat-storage material within the containers.

The space heater illustrated in Figs. 7 and 8 further includes a plurality of air-inlet openings 80 through the bottom wall of housing 70, and air-outlet openings 81 through the top wall of the housing. A closure member 82 selectively opens or closes one or both of these openings. Thus, the closure member would be in its closed position during the period of time (e.g. daytime) the space heater is used for storing heat, and would be moved to its open position during the period of time (e.g., nighttime) it is to release heat. Preferably, the device is provided with a blower 83 to produce a forced draft of air from the air inlet openings 80 to the air outlet openings 81 during the period the device is operated for releasing the stored heat.

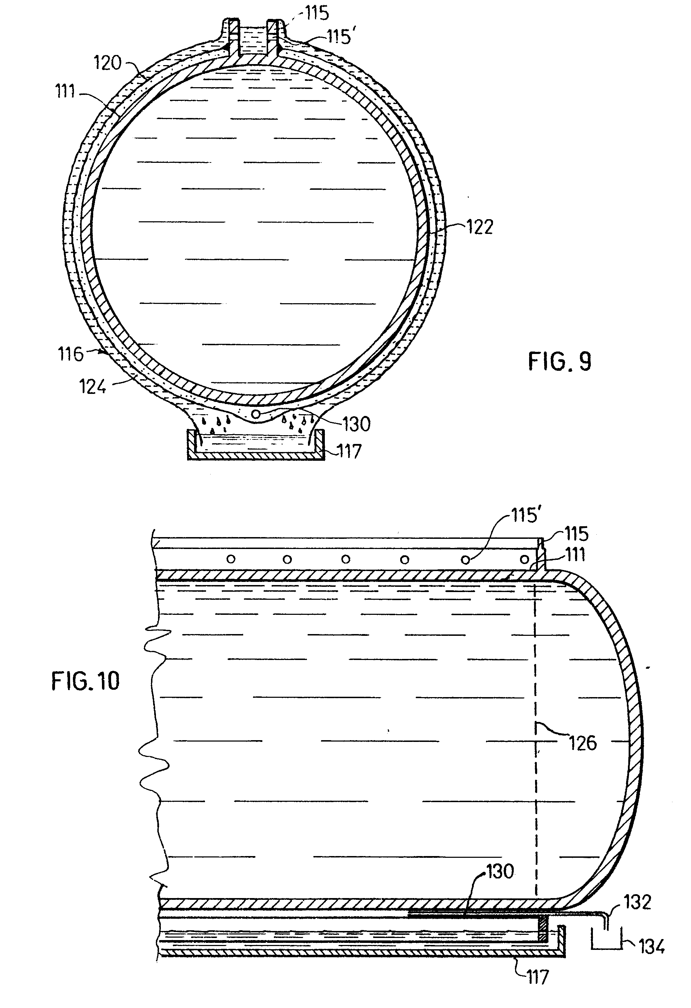

Figs. 9 and 10 illustrate a further heat-exchanger similar to that of Fig. 1, including a tubular container 111 for one of the materials to be heated, a distributor channel 115 formed with spaced openings 115' at the upper end of the container, and a thin, pliable foil 116 loosely draped around the sides of the container and open to a drainage sump 117. In this case, however, the enclosure for the material to be heated also includes a second thin, pliable foil 120 losely applied around container 111. Thus, foil 120 constitutes an inner foil lying loosely over the outer face of the container, and foil 116 constitutes an outer foil lying loosely over the inner foil. The inner foil 120 may be a single film adhesively secured at its free ends to the sides of the distributor channel member 115. The outer foil 116 may also be a single film, but in this case it is secured at its mid portion to distributor channel 115 and its two free ends are permitted to drape into the lower drainage sump 117.

A thin layer 122 of oil, silicone grease, or other material is applied between container 111 and inner foil 120 to promote the adhesion by surface tension of the inner foil to the container. This reduces the possibility of trapping air between the inner foil and the container, and therefore increases the heat-transfer between the two. The space 124 between the two foils 120 and 116, however, does not include such oil or grease so as to permit the two foils to adhere to each other only by the surface tension of the thin film of heating liquid flowing between them and into the drainage sump 117. The edges 126 of the inner foil 120 are adhesively bonded to the ends of container 111.

The illustrated heat-exchanger further includes a venting tube 130 between the inner foil 120 and the outer face of container 111 to provide a pathway leading from that space to the atmosphere. Venting tube 130 is inserted between the inner foil 120 and the end of container 111 in the longitudinal direction, and projects outwardly through bonded edge 126 of foil 120, where it terminates in an end 132 overlying a receptacle 134.

As described above, the heating liquid applied to the distributor channel member 115 flows by gravity as a thin continuous film between the outer foil 116 and the inner foil 120, thereby providing a large surface area for efficient heat-exchange between it and the liquid within container 111. The addition of the inner foil 120, and the venting tube 130 between it and the outer face of the container 111, provides a leak detector to indicate any leakage through the wall of container 111. Thus, if the liquid within container 111 is potable water, and the heating liquid is an oil, any leakage through the wall of container 111 will not cause the oil to pollute the water, but will rather cause the water to leak into the space between the container 111 and the inner foil 120, and through tube 132 into container 134, which leakage will thereby be indicated.

The inner foil 120 may be of aluminum sufficiently thick to insure against pin-holes but sufficiently thin to make it pliable. The external foil 116 may also be of aluminum and should preferably be thinner than the inner foil 120 so as to permit it to be more pliable and to more freely conform to and adhere to the outer face of foil 120. As one example, the thickness of the inner foil 120 may be 40-100 microns, and that of the outer foil 116 may be 15-40 microns.

Instead of using aluminum foil, there may be used other metal foils  e.g., copper, or plastic films  particularly if the heat-exchange liquid in contact therewith is of water or other liquid tending to corrode metal films.

<u>THE CLAIMS</u>

1.   A heat-exchanger for transferring heat between a first liquid material and a second material, comprising a heat-conductive enclosure enclosing said second material, characterized in that said heat-exchanger further includes a thin, pliable foil loosely-resting against and substantially enclosing said heat-conductive enclosure; and inlet means for inletting said first liquid material between said foil and said heat-conductive enclosure at an upper location thereof such that said liquid freely flows by gravity as a thin film in contact with said foil and said heat-conductive enclosure to thereby transfer heat between said two materials through said heat-conductive enclosure.

2.   The heat-exchanger according to Claim 1, wherein said heat-conductive enclosure comprises a rigid heat-conductive wall against which said foil rests.

3.   The heat-exchanger according to Claim 1, wherein said heat-conductive enclosure comprises a rigid heat-conductive wall enclosed by a second thin pliable foil, said first-mentioned foil constituting an outer foil and loosely resting against said second foil, constituting an inner foil.
thin pliable foil.

4.   The heat-exchanger according to Claim 3, further including means defining a passageway leading from the space between said inner foil and said heat-conductive wall of the enclosure to the atmosphere.

5.   The heat-exchanger according to either of Claims 3 or 4, further including, between said heat-conductive wall and said inner foil, a coating of a material promoting the adhesion by surface tension of said inner foil to said wall.

6. The heat-exchanger according to Claim 1, wherein said enclosure is a metal container, said foil substantially completely enclosing said metal container but including an open bottom to permit the freely-flowing film of said first liquid to exit by gravity therethrough.

7. The heat-exchanger according to Claim 6, wherein said metal container is of tubular configuration.

8. The heat-exchanger according to Claim 7, wherein there are a plurality of said tubular containers supported at different heights with their respective interiors interconnected to permit temperature stratification of said second material flowing therethrough, each of said tubular containers including an enclosing foil with the open bottom of one aligned with the inlet means of the underlying one such that said liquid flows by gravity from one tubular container to the next.

9. The heat-exchanger according to Claim 6, wherein said second material is a phase-changing heat storage material for storing heat supplied thereto by said first liquid during one period of time, and for releasing heat during another period of time.

10. The heat-exchanger according to Claim 9, further including an outer housing for said container and the heat storage material therein, said housing including an air inlet opening, an air outlet opening, movable closure means for closing said openings during the period of time when heat is to be stored and for opening said openings during the period of time when heat is to be released, and a blower for producing a forced draft of air through the housing.

FIG 1

FIG 2

FIG 3

FIG 4

FIG. 5

FIG.6

FIG. 8

FIG. 7

FIG. 9

FIG. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A- 780 280 (SOCIETE ALGERIENNE DES APPAREILS GASQUET, PEPIN ET COQ) * Whole document * | 1,6,7 | F 28 D 3/02 F 24 D 11/00 |
| A | FR-A-2 412 037 (KOOR METALS) * Page 4, line 17 - page 6, line 3; figures 3-5 * | 1 | |
| A | US-A-1 790 015 (MORROW) * Figures 1-3 * | 8 | |
| A | GB-A- 605 804 (LEE) * Figures 1-3 * | 8 | |
| A | DE-A-1 939 793 (THERMO-BAUELEMENT) * Claims 1,12,15; figures 1b,1c * | 9,10 | TECHNICAL FIELDS SEARCHED (Int. Cl.4) |
| A | EP-A-0 063 834 (ESMIL) | | F 28 D F 24 J F 24 H |
| A | US-A-4 142 513 (AUGER) | | |
| A | US-A-4 316 450 (SOMOS) | | |

The present search report has been drawn up for all claims

| Place of search | Date of completion of the search | Examiner |
|---|---|---|
| THE HAGUE | 05-08-1985 | JEST Y.G.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82